# EUROPÄISCHE PATENTSCHRIFT

(11) **EP 2 092 468 B1**
(45) Veröffentlichungstag und Bekanntmachung des Hinweises auf die Patenterteilung: **04.05.2011**
(21) Anmeldenummer: 07870206.5
(22) Anmeldetag: 14.12.2007
(51) Int. Cl.: G06K 19/077

(54) **VERFAHREN ZUR ANBRINGUNG VON KENNZEICHEN AUF SUBSTRATOBERFLÄCHEN MIT HILFE EINES TRANSFERVERFAHRENS**
METHOD FOR APPLYING MARKINGS TO SUBSTRATE SURFACES BY MEANS OF A TRANSFER METHOD
PROCÉDÉ POUR APPOSER DES SIGNES CARACTÉRISTIQUES SUR DES SURFACES DE SUPPORTS PAR UN PROCÉDÉ DE TRANSFERT

(30) Priorität: 21.12.2006 DE 102006061798
(43) Veröffentlichungstag der Anmeldung: 26.08.2009
(73) Patentinhaber: Simons, Gisela, 48301 Nottuln (DE)
(72) Erfinder: Simons, Gisela, 48301 Nottuln (DE)
(74) Vertreter: Hoffmeister, Helmut
(86) Internationale Anmeldenummer: PCT/EP2007/010996
(87) Internationale Veröffentlichungsnummer: WO 2008/086871

(56) Entgegenhaltungen:
- EP-A- 1 271 398
- WO-A-2006/076667
- AU-B2- 743 556
- US-A- 6 050 622
- US-A1- 2001 043 162
- US-A1- 2003 062 119
- US-A1- 2004 177 492

## Beschreibung

Die Erfindung betrifft ein Verfahren zur Anbringung von Kennzeichen auf einer Substratoberfläche aus waschbarem und knautschfähigem Material mit Hilfe eines Transferdruckverfahrens, bei dem von einer präparierten Release-Trägerfolie durch Kontakt mit der zu bedruckenden Substratoberfläche unter Wärmeeinwirkung ein auf der Release-Trägerfolie befindliches Haftbild, umfassend wenigstens einen RFID-Bausatz, der aus einem aufgesetzten RFID-Chip und einer Antenne besteht, auf das Substrat übertragen wird.

Es ist ein Verfahren (vergl. WO 2006/076667; dort Anspruch 54) bekannt, nach dem sogenannte RFID-Tags hergestellt werden, indem auf einer als Band (ribbon) gestalteten Transferfolie der RFID-Schaltkreis und eine Antenne aufgedruckt werden. Die Teile werden galvanisch über eine leitfähige Farbe (ink) verbunden. Derartige Tags können als Etiketten verwendet werden. Aus den Unterlagen zum genannten Stan der Technik geht nicht hervor, ob die Tags bei einem Waschvorgang benetzt werden dürfen. Der Anspruch 1 ist gegen dise Schrift WO 2006/76667 abgegrenzt.

Bekannt ist weiterhin EP 1271398 ein mehrschichtiges Sicherheitsetikett aus Papier, auf dem eine Antenne und ein damit verbundener Chip zur Ausbildung eines RFID-Transponders angeordnet sind. Dabei ist eine Kleberschicht vorhanden, deren Haftung auf einem Gegenstand derart ist, dass die zum Ablösen erforderliche Kraft größer ist als die mechanische Stabilität der Trägerschicht, so dass diese beim Versuch des Ablösens vom damit gekennzeichneten Gegenstand irreversibel verformt und dadurch die normale Funktionsfähigkeit des RFID-Transponders gestört und/oder zerstört wird. Zu einer irreversiblen Verformung gehört offensichtlich aus das Zerreißen.

Dem Fachmann offenbart diese Druckschrift die Kenntnis, dass bei Auswahl eines passenden Klebstoffs und von Folienmaterialien, die verklebt werden, es sichergestellt werden kann, dass die Komponenten nicht ohne Zerstörung auseinander gerissen werden können.

US 6,050,622 offenbart ein RFID-Sicherheitsetikett, dessen Antenne über Sollbruchstellen verfügt. Beim Ablösen des Etiketts wird die Antenne aufgetrennt.

Es stellt sich die Aufgabe, ein Verfahren zur Anbringung von Kennzeichen auf einer Substratoberfläche der eingangs genanten Art anzugeben, bei dem ein zuverlässiges Arbeiten des RFID-Bausatzes auch unter Umgebungsbedingungen, wie sie beim Waschen der Substratoberfläche auftreten, möglich ist, wobei ein zerstörungsfreies Entfernen der Kennzeichen und des RFID-Bausatzes ausgeschlossen sind.

Diese Aufgabe wird durch die Erfindung, wie sie in Anspruch 1 definiert ist, gelöst.

Bevorzugte Ausführungsformen sind Gegenstand der Unteransprüche.

"Bekannte" Transferverfahren sind Druckverfahren, bei denen auf einer Release-Transferfolie ein seitenverkehrtes oder seitenrichtiges Haftbild in Form einer Transferschicht aufgebracht wird, die auf ein anderes Substrat übertragen wird und dort das Haftbild hinterlässt, dass nur unter Zerstörung entfernbar ist. Vorzugsweise wird zunächst auf der Transferfolie eine Vorlage erstellt, die übertragbar ist. Die Vorlage ist im Allgemeinen lediglich ein Druckbild, das allein durch die Farbschichten gebildet wird. Die Release-Trägerfolie wird nach dem Transfervorganges entfernt. Allein die bedruckte Substratoberfläche ist somit Träger des Haftbildes.

Das Ablösen von der Release-Trägerfolie kann beispielsweise durch Auflösen einer wasserlöslichen Klebeverbindung zwischen Release-Transferfolie und Transferschicht geschehen, wobei ähnlich wie bei einem Abziehbild anschließend eine Verbindung zwischen Substratoberfläche und Transferschicht erfolgt. Zur Haftvermittlung werden beispielsweise die Reste des Klebstoffes, die noch am Transferbild haften, genutzt. Auch kann die Substratoberfläche entsprechend eingestellt oder präpariert sein, beispielsweise mit einer dünnen Haftvermittler-Beschichtung. Ein solches Transferverfahren wird als Nasstransferverfahren bezeichnet.

Anstelle eines wasserlöslichen Klebstoffes kann auch eine dünne permanente, durch mechanisches Trennen von der Release-Trägerfolie ablösbare Klebstoffschicht verwendet werden. Ein solches Transferverfahren wird als Trockentransferverfahren bezeichnet.

Die Transferschicht kann aus mehreren nacheinander aufgebrachten Druckschichten bestehen und beispielsweise auch eine lokal abdeckende, blättchenartige Schicht aus einem druckfähigen Material, beispielsweise gelöstem Naturkautschuk oder PVC, umfassen.

Es sind RFID-Einrichtungen (radio frequency identification) mit eingebauten RFID-Baugruppen aus dem Stand der Technik bekannt. Eine RFID-Einrichtung kann beispielsweise ein passives RFID-Etikett sein, welches eine darin eingebettete RFID-Baugruppe trägt. Eine solche Baugruppe oder Schaltung wird auch als Transponder bezeichnet. Sie umfasst einen RFID-Chip und eine Antenne. Zum Ein- und Auslesen von Informationen ist ein RFID-Lesegerät erforderlich, das über elektromagnetische Wellensignale Daten aus dem Chip der RFID-Baugruppe abfragen und die erforderliche Betriebsenergie induzieren kann. Das Lesegerät empfängt das Antwortsignal und interpretiert die darin enthaltenen Daten, die vom Lesegerät auf einen Rechner übertragen werden können. Im RFID-Chip können sowohl Informationen auf Dauer gespeichert werden als auch neue Informationen eingelesen oder Informationen geändert werden. Genutzt werden können die Daten zur Überwachung der Verkaufsvorgänge, der unerlaubten Entnahme und zur Kontrolle der Vorräte und Lieferungen. Somit können logistische Abläufe und Lieferketten kontrolliert werden.

Als Haftbild wird insbesondere ein RFID-Bausatz aufgebracht, der aus einem RFID-Chip und einer aufgedruckten, flexiblen, vorzugsweise flachliegenden Antenne besteht, die von einem Deckblatt aus einem flexiblen, wenigstens im Temperaturbereich von - 25° bis 200°C wärmebeständigen Kunststoff besteht, abgedeckt sind.

Die Erfindung nutzt die Möglichkeit, dass insbesondere passive RFID-Bausätze miniaturisierbar sind und dass die für die Realisierung der Erfindung benötigte Antenne gedruckt werden kann. Es soll aber nicht ausgeschlossen werden, dass auch der Chip wenigstens teilweise in einem weiteren Druckvorgang auf die Release-Trägerfolie aufgedruckt und auf das Substrat übertragen wird.

Gemäß der Erfindung werden miniaturisierte Bausätze in einer Größenordnung von einigen Millimetern bis einigen Zentimetern Durchmesser bzw. in der Diagonale und mit einer Dicke von etwa 0,01 bis 1 mm eingesetzt.

Bei Substraten, die geknautscht und während eines Waschvorgangs erhitzt werden, müssen die Bausätze (Transponder) entsprechend geschützt sein. Die Hülle ist entsprechend wasserdicht aus einem Kunststoff herzustellen. Hierzu werden entsprechende Lackschichten auf die Release-Trägerfolie aufgedruckt. Eine hohe Temperaturbeständigkeit, die das Waschen der gedruckten Substrate ermöglicht, wird vorgesehen.

Die Antenne der Transponder besteht beispielsweise aus einem metallischen oder einem leitenden polymerem Material. Hierzu eignet sich beispielsweise eine leitende Silberdruckfarbe oder eine Druckfarbe, die mit leitfähigem Polymeren, beispielsweise auf der Basis von Polypyrrol oder PPV (Poly para-phenylen-vinylen), aufgebaut sind. Auch auf leitendem Kohlenstoff (Ruß, Carbon-Fasermaterial) aufgebaute Druckfarben sind verwendbar. Nach dem Aufdrucken der Antenne wird ein Chip, dessen Größe nur einen Bruchteil der Flächendeckung der Antenne ausmacht, mit der Antenne über Heißpressung, Verlöten oder Verkleben galvanisch verbunden.

Die zur Funktion benötigten Antennen werden vorzugsweise getrennt, in einer Vielzahl auf ein flexibles, wärmebeständiges Substrat, das Rollenform hat, gedruckt und anschließend mit je einem RFID-Chip verbunden, insbesondere verklebt oder verlötet. Anschließend werden die RFID-Baugruppen mit jeweils einem dazugehörigen Flächenabschnitt des Substrats vereinzelt bzw. in schmalere Rollen aufgetrennt.

Insbesondere ist vorteilhaft, einen Überstand des Substrats um den RFID-Chip und die Antenne herum als Umhüllung zu formen. Hierzu eignet sich als Material ein Elastomer, beispielsweise ein mastifizierter Naturkautschuk (Latex) oder ein gelöster Kunststoff. Temperaturbeständige, weiche Thermoplasten sind geeignet, beispielsweise weichgemachtes Polyacetal. Derartige Materialien können als Blatt in einem Durchgang erstellt und je einem Transponder zugeordnet werden. Dementsprechend kann auch eine Hülle für den Transponder hergestellt werden.

Der RFID-Bausatz (Transponder) kann von einem von der Release-Trägerfolie ablösbaren Deckfolienblatt abgedeckt sein, die nach dem Transferieren den Bereich des Transponders auf der Substratoberfläche luftdicht verschließt. Nach der Transferübertragung ist demnach ein durch eine Folie geschützter RFID-Bausatz auf dem Substrat angebracht und schützt diesen gegen äußere Einflüsse.

Der RFID-Bausatz bildet ein dem Druckbild oder Transferbild analoges Gebilde, das auf dem Substrat haftet und dort nur unter Zerstörung entfernt werden kann. Zusätzlich zu dem RFID-Bausatz kann die Transferschicht eine gedruckte Farbschicht umfassen. Die Erfindung umfasst demnach eine Ausführungsform, bei der die im Transferdruck übertragene Bildschicht allein aus dem RFID-Bausatz besteht, wobei keine weitere Farbschicht eingesetzt wird, oder einen mit einer Farbschicht kombinierten Transponder.

Ein Ausführungsbeispiel der Erfindung wird anhand der Zeichnung erläutert. Die Figuren zeigen im Einzelnen:
- Fig. 1: eine schematische Darstellung eines auf eine Release-Trägerfolie aufgesetzten RFID-Bausatzes mit Hülle und umgebender Farbschicht;
- Fig. 2: in schematischer Darstellung den mit einem Tex- til-Stück verbundenen, umhüllten RFID-Bausatz mit ihn umgebender Farbschicht.

Eine für ein knautschfähiges Substrat 14 geeignete Kennzeichnung mit einem RFID-Bausatz (Transponder) 10 wird gemäß Ausführungsbeispiel hergestellt, indem auf eine hitzebeständige silikonisierte Release-Trägerfolie 11 ein Deckfolienblatt 5 aus Polyvinylchlorid lackartig gedruckt wird. Nach dem Verdunsten des Lösungsmittels verbleibt das Deckfolienblatt 5. Ein Randsaum 6 des Deckfolienblattes 5 steht allseits über die nachfolgend aufgedruckte Antenne über.

Mit Hilfe eines Siebdruckverfahrens wird eine mäandrierende Antenne 2 auf das Deckfolienblatt 5 mit leitfähiger Druckfarbe auf der Basis eines leitfähigen Polymers aufgedruckt. Als leitfähiges Polymer wird ein mit Ruß gefärbtes Druckfarbengemisch auf der Basis von PPV verwendet.

Im Mittelbereich der Antenne 2 wird eine Mulde 3 eingedrückt, in die ein RFID-Chip 4 eingelegt und mit der Antenne 2 verklebt und damit galvanisch verbunden wird. Hierzu ist der Chip mit entsprechenden Anschlusskontakten (verdeckt) versehen, die mit der Antennenspur mit elektrisch leitendem Klebstoff verklebt werden. Die Dicke des Deckfolienblattes mit den verbundenen Teilen beträgt etwa 0,5 mm. Die Seitenlänge ist etwa 2,5 mm. Bei dem RFID-Chip 4 handelt es sich um einen so genannten passiven Chip, der keine eigene Stromversorgung hat, sondern induktiv jeweils über das Feld mit elektrischer Energie versorgt werden muss.

Das Erstellen von Deckfolienblatt 5 mit Antenne 2 und Chip 4 geschieht nicht in Einzelfertigung, sondern in Form größerer bedruckbarer Rollenbahnen, auf denen Antennen 2 und RFID-Chips 4 in der genannten Art rasterartig aufgedruckt bzw. angeordnet werden. Die Rollenbahn kann dann aufgerollt werden. Durch Zerschneiden erhält man schmalere Rollen mit einzelnen Transpondern 10 auf der Release-Trägerfolie 11. Der Empfangsbereich der Transponder für eine Lesegerät liegt bei derartigen Antennen in einem Umkreis von etwa 3m oder mehr.

Außer in der direkten Umgebung des RFID-Chips 4 ist das Deckfolienblatt 5 hoch flexibel und knickfähig mit einem Knickradius von etwa 2 mm. Es ist temperaturbeständig bei Waschgängen bis 95°C. Weder Chip 4 noch Antenne 2 werden über einen Zeitraum von etwa 4 Stunden durch die Temperatur von 95°C in ihrer Funktion beeinträchtigt.

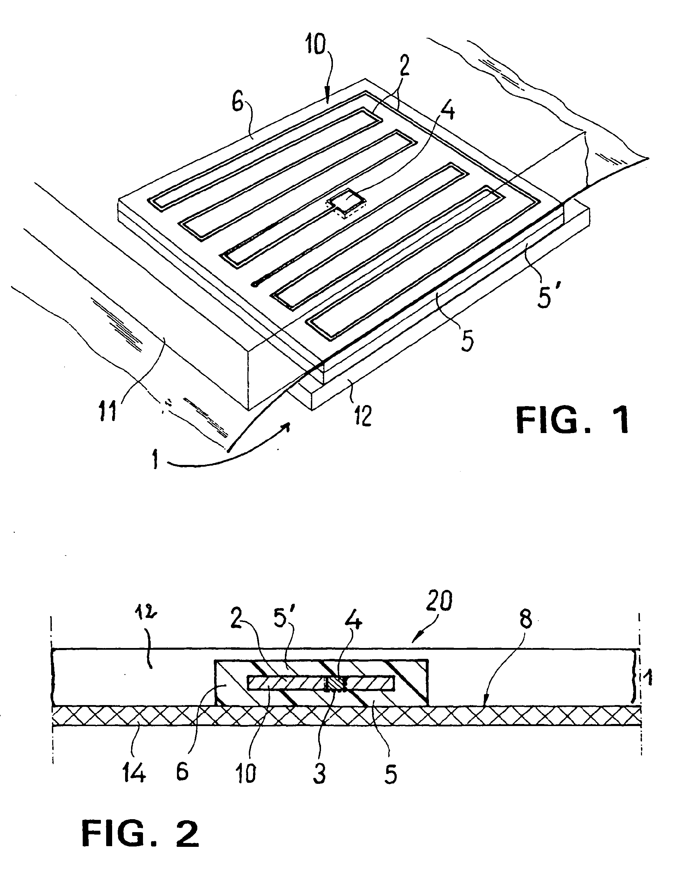

Das Deckfolienblatt 5 mit dem RFID-Bausatz 10 (Antenne 2 und RFID-Chip 4) wird im Folgenden als RFID-Blatt 20 bezeichnet. Das RFID-Blatt 20 befindet sich in einer bestimmten Position auf einer Release-Trägerfolie 11. Nachdem eine gewisse Verfestigung eingetreten ist, wird eine weitere Bildschicht 12, bestehend aus Druckfarbe, auf das Deckfolienblatt 5 im Siebdruckverfahren aufgedruckt. Die Druckfarbe kann beispielsweise in Form eines Ornaments, einer Marke oder dergleichen aufgedruckt sein. Auch kann ein weiteres Folienblatt 5' vorgesehen sein, so dass sich eine Hülle schon auf der Release-Trägerfolie 11 ergibt. Nach Trocknen der Bildschicht 12 ist damit eine Transferschicht für den Transfer geschaffen. Wie an sich bekannt, wird die Release-Trägerfolie 11 mit einer Haftmittel-Oberfläche auf ein Substrat, hier ein Textilstoff, aufgelegt und kurzzeitig auf etwa bis 80° bis 160°C erhitzt. Das Deckfolienblatt 5 drückt allseitig auf das Substrat, und schließt die Druckfarbe, die Antenne und den Chip ab. Damit ist das RFID-Blatt mit RFID-Chip 4 und Antenne 5, das heißt der Transponder, durch ein Transferdruckverfahren auf dem Textilstoff 14 aufgebracht worden (vergleiche Figur 2).

Im Ausführungsbeispiel ist ein Textilstoff 14 in Form eines Gewebes mit dem Transponder 10 versehen. Ein Teil der Druckfarbe 12 sublimiert in die Oberfläche des Textils 14 hinein.

Da die Antenne 2 aus einem flexiblen, hitzeunempfindlichen Material besteht und so direkt mit der übrigen Druckfarbe aufgebracht werden kann, ergibt sich ein Massen-Kennzeichnungsverfahren, bei dem jeder Transponder als Kennzeichen dient und in technisch hervorragender Weise Daten abgeben, jedoch auch aufnehmen kann

Das Material der Antenne ist im Ausführungsbeispiel aus der Klasse der leitfähigen Polymere gewählt worden. Es sind jedoch auch noch andere derartige Polymere bekannt, die wie folgt genannt werden können: cis-Olyacetylen, trans-Polyacetylen, Poly(para-phenylen), Polythiophen, Polypyrrol, Polyanilin.

Es ist jedoch auch möglich, für die Antenne Druckfarben auf der Basis von Metallstäuben und Metallfasern zu verwenden oder Kohle-Fasern oder Russpartikel in derartige Druckfarben zu mischen, um sie leitfähig zu machen.

Wesentlich ist, dass die Knickfähigkeit der Antenne gewahrt ist, was durch entsprechende Mischungen mit flexiblen Trägerkörpern erreicht werden kann.

Der Übergang von den Kontakten des RFID-Chips auf die Antenne ist sowohl möglich mit Klebeverbindungen, Niedrigtemperatur-Loten als auch über Druckkontaktverbindungen. Als Hüllfolien bzw. Deckblätter eignen sich zahlreiche andere Kunststoff-Materialien. Diese müssen physiologisch unbedenklich sein, über einen großen Bereich ihre Elastizität und Flexibilität behalten und elektrisch und elektronisch neutral sein. Als geeigneter Folien-Kunststoff hat sich hierbei Polyacetal als temperaturbeständiges, weiches Thermoplast erwiesen.

Die Transferverfahren beinhalten auch Nass- und Trockentransferverfahren, die sich im Temperaturbereich 25°C ± 10°abspielen.

## Patentansprüche

1. Verfahren zur Anbringung von Kennzeichen auf einer Substratoberfläche aus waschbarem und knautschfähigem Material mit Hilfe eines Transferdruckverfahrens,
bei dem von einer präparierten Release-Trägerfolie (11) durch Kontakt mit der zu bedruckenden Substratoberfläche unter Wärmeeinwirkung ein auf der Release-Trägerfolie (11) befindliches Haftbild, umfassend wenigstens einen RFID-Bausatz (10), der aus einem aufgesetzten RFID-Chip (4) und einer Antenne (2) besteht, auf das Substrat übertragen wird,
**dadurch gekennzeichnet, dass**
- der RFID-Bausatz (10) auf einem von der Release Trägerfolie (11) ablösbaren Deckfolienblatt (5) aufgebracht wird,
- wobei die Antenne (2) auf das Deckfolienblatt (5) aufgedruckt ist,
- das Deckfolienblatt (5) aus einem im Temperaturbereich von -25° bis +200°C wärmebeständigen Kunststoff besteht, das Deckfolienblatt (5)
- das Deckfolienblatt (5) nach dem Transferieren mit der Substratoberfläche luftdicht und wasserfest verklebt wird,
das Deckfolienblatt (5) danach auf der Substratoberfläche haftet und den RFID-Bausatz (10) abdeckt,
- 50 dass das Deckfolienblatt (5) und der RFID-Bausatz (10) nur unter Zerstörung des RFID-Bausatzes (10) von der Substratoberfläche entfernbar sind.

2. Verfahren nach Anspruch 1, **dadurch gekennzeichnet, dass** die zur Funktion benötigte Antenne (2) in einer Vielzahl auf flexible, wärmebeständige Deckfolienblätter gedruckt wird und anschließend mit je einem RFID-Chip (4) verbunden und dann vereinzelt werden.

3. Verfahren nach Anspruch 2, **dadurch gekennzeichnet, dass** nach dem Transfervorgang ein Überstand des Deckfolienblattes (5) um den RFID-Chip (4) und die Antenne (2) herum als Umhüllung geformt wird.

4. Verfahren nach Anspruch 2 oder 3, **dadurch gekennzeichnet, dass** das Deckfolienblatt (5) aus einem Elastomer besteht.

5. Verfahren nach Anspruch 4, **dadurch gekennzeichnet, dass** das Deckfolienblatt (5) aus mastifiziertem Naturkautschuk besteht.

6. Verfahren nach Anspruch 2 oder 3, **dadurch gekennzeichnet, dass** das Deckfolienblatt (5) aus einem Thermoplasten besteht.

7. Verfahren nach Anspruch 6, **dadurch gekennzeichnet, dass** das Deckfolienblatt (5) aus weichgemachtem Polyacetal besteht.

8. Verfahren nach einem der vorgenannten Ansprüche, **dadurch gekennzeichnet, dass** die Antenne (2) aus einem metallischen Material besteht.

9. Verfahren nach einem der vorgenannten Ansprüche, **dadurch gekennzeichnet, dass** die Antenne (2) aus einem leitenden, polymeren Material besteht.

## Claims

1. Method for applying markings to a substrate surface made from washable and crumplable material using a transfer printing method,
in which, from a prepared release carrier film (11) by contact with the substrate surface to be printed upon, under the effect of heat an adhesive image located on the release carrier film (11) and comprising at least one RFID module (10), which consists of a positioned RFID chip (4) and an antenna (2), is transferred to the substrate,
**characterised in that**
- the RFID module (10) is applied to a cover film sheet (5) which is detachable from the release carrier film (11),
- wherein the antenna (2) is printed onto the cover film sheet (5),
- the cover film sheet (5) consists of a synthetic material which is heat-resistant in the temperature range from -25° to +200°C.
- the cover film sheet (5) is glued to the substrate surface in an airtight and watertight manner after the transfer process,
- the cover film sheet (5) then adheres to the substrate surface and covers the RFID module (10),
- so that the cover film sheet (5) and the RFID module (10) can be removed from the substrate surface only if the RFID module (10) is destroyed.

2. Method as claimed in claim 1, **characterised in that** the antenna (2) which is required for operation is printed in large numbers onto flexible, heat-resistant cover film sheets and then connected to a respective RFID chip (4) and then separated.

3. Method as claimed in claim 2, **characterised in that** after the transfer step a projection of the cover film sheet (5) is formed as a sheath around the RFID chip (4) and the antenna (2).

4. Method as claimed in claim 2 or 3, **characterised in that that** the cover film sheet (5) consists of an elastomer.

5. Method as claimed in claim 4, **characterised in that** the cover film sheet (5) consists of masticated natural rubber.

6. Method as claimed in claim 2 or 3, **characterised in that** the cover film sheet (5) consists of a thermoplast.

7. Method as claimed in claim 6, **characterised in that** the cover film sheet (5) consists of softened polyacetal.

8. Method as claimed in any one of the preceding claims, **characterised in that** the antenna (2) consists of a metallic material.

9. Method as claimed in any one of the preceding claims, **characterised in that** the antenna (2) consists of a conductive polymer material.

## Revendications

1. Procédé pour réaliser un marquage sur une surface de substrat constitué d'un matériau lavable et froissable à l'aide d'un procédé d'impression transfert,
dans lequel on reporte, à partir d'un film de transfert antiadhésif préparé (11), une image adhésive se trouvant sur ce film de transfert antiadhésif (11) et comprenant au moins un module RFID (10), constitué d'une puce RFID (4) intégré et d'une antenne (2), sur le substrat en mettant le film (11) en contact avec la surface du substrat à imprimer sous l'action de la chaleur,
**caractérisé en ce que**
- le module RFID (10) est déposé sur un film de protection (5) détachable du film de transfert antiadhésif (11),
- dans lequel l'antenne (2) est imprimée sur le film de protection (5),
- le film de protection (5) est constitué d'un matériau synthétique thermorésistant dans une plage de températures de -25 °C à +200 °C,
- le film de protection (5) est collé, après le procédé de transfert, à la surface du substrat de manière étanche à l'air et résistant à l'eau,
- le film de protection (5) adhère ensuite à la surface du substrat et recouvre l'ensemble RFID (10),
- et **en ce que** le film de protection (5) et le module RFID (10) ne peuvent être ôtés de la surface du substrat que par la destruction du module RFID (10).

2. Procédé selon la revendication 1, **caractérisé en ce que** l'antenne (2) nécessaire au fonctionnement est imprimée une multitude de fois sur des films de protection thermorésistants souples et **en ce que** ces antennes sont reliées ensuite respectivement à une puce RFID (4) et puis dissociées en modules individuels.

3. Procédé selon la revendication 2, **caractérisé en ce qu'**une partie du débordement du film de protection (5) est disposée, après le procédé de transfert, autour de la puce RFID (4) et de l'antenne (2) en forme d'enveloppe.

4. Procédé selon la revendication 2 ou 3, **caractérisé en ce que** le film de protection (5) est constitué d'un élastomère.

5. Procédé selon la revendication 4, **caractérisé en ce que** le film de protection (5) est constitué d'un caoutchouc naturel malaxé.

6. Procédé selon la revendication 2 ou 3, **caractérisé en ce que** le film de protection (5) est constitué d'une matière thermoplastique.

7. Procédé selon la revendication 6, **caractérisé en ce que** le film de protection (5) est constitué d'un polyacétal ramolli.

8. Procédé selon l'une quelconque des revendications précédentes, **caractérisé en ce que** l'antenne (2) est constituée d'un matériau métallique.

9. Procédé selon l'une quelconque des revendications précédentes, **caractérisé en ce que** l'antenne (2) est constituée d'un matériau polymère conducteur.
